(19) **Europäisches Patentamt**
**European Patent Office**
**Office européen des brevets**

(11) **EP 4 679 650 A1**

(12) **EUROPEAN PATENT APPLICATION**

(43) Date of publication:
**14.01.2026 Bulletin 2026/03**

(51) International Patent Classification (IPC):
**H02H 3/16** (2006.01)          **H02H 5/12** (2006.01)

(21) Application number: **24187084.9**

(52) Cooperative Patent Classification (CPC):
**H02H 5/12; H02H 3/165;** H02H 3/347

(22) Date of filing: **08.07.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **Wahlroos, Ari**
**65320 Vaasa (FI)**

• **Altonen, Janne**
**65320 Vaasa (FI)**
• **Vanhala, Kari**
**65320 Vaasa (FI)**

(74) Representative: **Kolster Oy Ab**
**Salmisaarenaukio 1**
**P.O. Box 204**
**00181 Helsinki (FI)**

Remarks:
Amended claims in accordance with Rule 137(2)
EPC.

(54) **METHOD AND APPARATUS FOR EARTH-FAULT PROTECTION**

(57)      A method and apparatus for earth-fault protection in a three-phase electric network, the apparatus being configured to detect (100) a phase-to-earth fault in the three-phase electric network, determine (110) an estimate of an earth-fault current of the detected phase-to-earth fault, determine (130) an estimate of a body current as a function of time resulting from the detected phase-to-earth fault on the basis of the determined estimate of the earth-fault current and an elapsed time from the detecting of the phase-to-earth fault, compare (140) the determined estimate of the body current to a predetermined threshold for the body current defined as a function of time and operate (150) the earth-fault protection in the three-phase electric network in response to the determined estimate of the body current exceeding the predetermined threshold for the body current.

Fig. 6

EP 4 679 650 A1

**Description**

TECHNICAL FIELD

The present invention relates to a method and an apparatus for earth-fault protection in a three-phase electric network.

BACKGROUND

In electric systems, such as electric networks or parts thereof, detection and/or elimination of faults and other adverse conditions is important to the safety and reliability of such systems, for example. For this purpose, e.g. electric transmission and distribution networks may be equipped with protection systems that can detect and/or eliminate such faults or other adverse conditions.

An earth-fault protection in a three-phase electric network, such as a distribution and/or transmission network, may be implemented based on a quantity indicative of a magnitude of the fault current, for example, with a predetermined operate time. The operation may also be time-variable such that the magnitude of the fault current may affect an operate time of the earth-fault protection. As an example, an inverse time characteristic may be applied in the earth-fault protection.

Applicable threshold values for the earth-fault current vs. fault duration maybe obtained from prevailing electrical standards or they may be user defined, for example, such that the earth-fault protection may be operated if the magnitude and duration of the fault current exceeds the threshold.

A problem related to the above solution is that in some situations it may not enable the earth-fault protection to operate accurately and/or fast enough, which may create a risk for personal safety, for example.

BRIEF DESCRIPTION

An object of the present invention is thus to provide a method and an apparatus for implementing the method so as to overcome the above problems or at least to alleviate the above problem. The objects of the invention are achieved by a method and an arrangement which are characterized by what is stated in the independent claims. The preferred embodiments of the invention are disclosed in the dependent claims.

The invention is based on the idea of determining an estimate of a body current resulting from a detected phase-to-earth fault in a three-phase electric network on the basis of an estimate of the earth-fault current and operating the earth-fault protection in the three-phase electric network on the basis of the determined estimate of the body current.

An advantage of the solution is that the earth-fault protection in the three-phase electric network can be operated based on predetermined permissible body current value(s).

BRIEF DESCRIPTION OF THE DRAWINGS

In the following the invention will be described in greater detail by means of preferred embodiments with reference to the attached [accompanying] drawings, in which

Figure 1 illustrates an example of an electric network according to an embodiment;
Figure 2 illustrates a diagram according to an embodiment;
Figure 3 illustrates a diagram according to an embodiment;
Figure 4 illustrates a diagram according to an embodiment;
Figure 5 illustrates a diagram according to an embodiment;
Figure 6 illustrates a flow diagram according to an embodiment;
Figure 7 illustrates a diagram according to an embodiment;
Figure 8 illustrates a block diagram according to an embodiment; and
Figure 9 illustrates a block diagram according to an embodiment.

DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures.

Different embodiments and examples may be described below using single units, models, equipment and memory, for example, without restricting the embodiments/examples to such a solution. Concepts called cloud computing and/or virtualization may be used. The virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In possible cloud computing network devices, computing devices and/or storage devices may provide shared resources. Some other technology advancements, such as Software-Defined Networking (SDN), may cause one or more of the functionalities described below to be migrated to any corresponding abstraction or apparatus or device. Therefore, all words and expressions should be interpreted broadly, and they are intended to illustrate, not to restrict, the embodiment in question.

The application of the various embodiments described herein is not limited to any specific system, but it can be used in connection with earth-fault (ground fault) protection of three-phase electric systems. As an example, the embodiments can be utilized in unearthed electric networks with an unearthed or isolated neutral, i.e. which have no intentional neutral point grounding but are grounded only by the natural phase-to-earth capacitances of the network. As another example, the embodiments can be utilized in compensated networks with a compensated neutral, also known as a resonant-earthed networks, where compensation of the fault current is achieved by installing one or more Petersen coils, also known as Arc Suppression Coils (ASC) or compensation coils, into neutral point(s) of the system. As a yet another example, the various embodiments can be utilized in impedance earthed networks with a neutral point provided with a resistance and/or reactance grounding, such as a high resistance and/or reactance grounding. In such networks with a high resistance earthed neutral point the value of the grounding resistance may be selected such that its value essentially corresponds to a resulting capacitive reactance of phase-to-earth admittances (~capacitances) of the galvanically connected network, for instance, such that an earth-fault current is limited approximately to a value equal to or slightly greater than the uncompensated capacitive earth-fault current of the network. An electric network, in which the various embodiments may be implemented, can be an electric power transmission and/or distribution network or a portion of a larger network, for example, and may comprise several electric lines and/or sections. The electric network may have a radial configuration supplied from one point thereof or a loop configuration comprising one or more loops and supplied from two or more points, or a combination of such configurations, for instance. Moreover, the use of the various embodiments is not limited to systems employing 50 Hz or 60 Hz fundamental frequencies or to any specific voltage level. Also a phase rotation order, such as L1-L2-L3 or L1-L3-L2, of the system does not limit the use of the various embodiments.

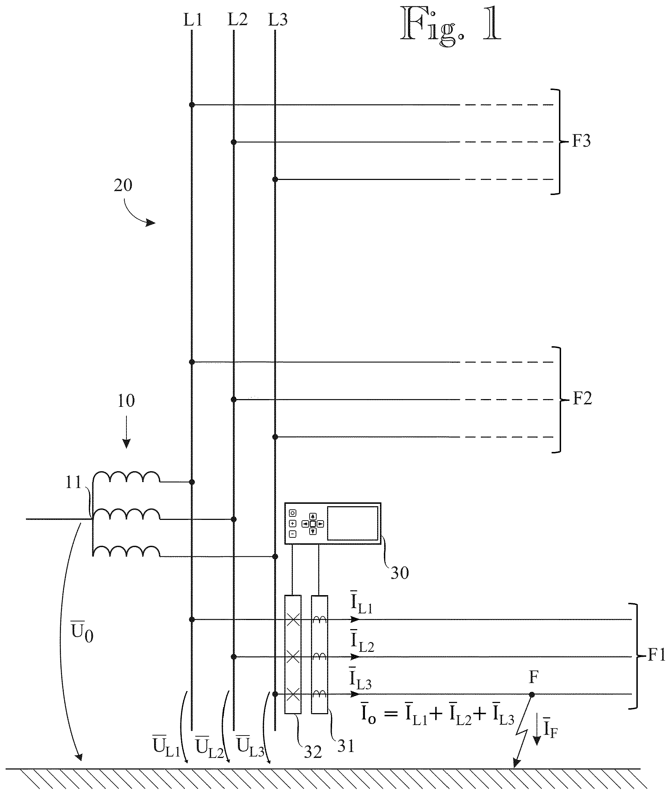

Figure 1 is a simplified diagram of an exemplary electric system showing some equipment (e.g. apparatuses, devices, nodes) and functional entities, whose implementation and/or number and/or configuration may differ from what is shown in the example of Figure 1. Such a system may also comprise other equipment, functional entities and/or structures, some of which used in or for big data, data management, and communication in the system or in any part of the system, for example. Also e.g. any communications protocols used may vary and may depend on the system characteristics, for instance.

The exemplary system of Figure 1 comprises an example of an electric network. The figure shows only components necessary for understanding the invention. The exemplary electric network can be a distribution network, such as a medium voltage (e.g. 20 kV) network. The exemplary electric network of Figure 1 is fed through a substation comprising a transformer 10 and a busbar system 20. The phases of the three-phase system are identified as L1, L2 and L3. $\overline{U}_{L1}, \overline{U}_{L2}, \overline{U}_{L3,}$ are the respective phase voltages of the example electric network. $\overline{U}_0$ is the zero sequence (neutral point 11) voltage ($\overline{U}_0 = (\overline{U}_{L1} + \overline{U}_{L2} + \overline{U}_{L3})/3$) of the example electric network. The example further shows three electric line outlets, i.e. feeders F1, F2 and F3. Feeder F1 has been illustrated in more detail and shows a control arrangement 30 for a protective arrangement. Such control arrangement 30 may comprise one or more intelligent electronic devices (IED), for example. The exemplary control arrangement 30 is connected to a switching apparatus 32 located at the connection point of feeder F1 to the busbar system 20. The switching apparatus 32 may be controlled by the control arrangement 30 and may comprise suitable switching means, such as one or more circuit breakers, configured to connect and disconnect the phases of the feeder F1 to the busbar system 20, for example. The exemplary control arrangement 30 is further connected to a measuring arrangement 31 located at the connection point of feeder F1 to the busbar system 20. Such measuring arrangement 31 may comprise e.g. current measuring means, such as one or more current transformers or transducers, for measuring various current quantities such as the phase currents $\overline{I}_{L1}, \overline{I}_{L2}$ and $\overline{I}_{L3}$ of feeder F1 and the residual current $\overline{I}_0 = \overline{I}_{L1} + \overline{I}_{L2} + \overline{I}_{L3}$. The exemplary measuring arrangement 31 may additionally or alternatively comprise (not shown in the figures) measuring means for other quantities, such as one or more voltage quantities and/or one or more frequency quantities and/or one or more power quantities and/or one or more temperature quantities, for example. As an example, possible voltage measuring means, such as one or more voltage transformers or transducers, could be configured to measure various voltage quantities, such as phase voltages and/or the zero sequence (neutral point 11) voltage $\overline{U}_0$ of the example electric network.

Figure 1 further illustrates an example of a phase-to-earth fault F occurring in phase L3 in feeder F1, wherein the resulting earth-fault current is $\bar{I}_F$. The term 'phase-to-earth fault' herein generally refers to a single phase-to-earth fault. The control arrangement 30 may be configured to detect an earth fault in the feeder F1, on the basis of suitable measurements obtained e.g. by the measuring arrangement 31 and/or received from further entities, and consequently to perform a fault protection of the feeder F1. The operating of the fault protection, or generally operating a protection, may comprise tripping one or more switching devices, such as the switching apparatus 32, in the electric network and/or preventing (blocking) a tripping of one or more switching devices in the electric network. Additionally or alternatively, the operating of the earth-fault protection may comprise switching off or limiting a fault current and/or signaling an alarm, for example. Switching off the fault current of the detected fault could be performed by switching off the feeder F1, or generally the protected entity or entities, from the feeding point, such as the substation 10, 20, with suitable switching means, such as the switching apparatus 32. It should be noted that there may be any number of feeders or other network elements in the network. There may also be several feeding substations. Further, the embodiments disclosed herein can be utilized with a switching station without a transformer 10, for example. In the exemplary system of Figure 1, the functionality of the various embodiments may be located at least in the control arrangement 30, for example. It is also possible that e.g. only some functions are performed at the location of the control arrangement 30 and the results and/or data are then transmitted to another unit or units (not shown in the figures) at another location for further processing. It is also noted that while in the example of Figure 1 the protected entity is a feeder of an electric network, such protected entity or a plurality of entities, could be another part of such an electric system or a component connected to electric system or generally any kind of electric device or component or system to be protected, for instance.

While current and/or voltage values and/or values of any other quantities that may be utilized in the various embodiments may be obtained by a suitable measuring arrangement, such as the exemplary measuring arrangement 31, voltage and/or current quantities and/or other quantities may also be measured at different location(s), for instance. In most of the existing protection systems, such values are readily available and thus the implementation of the various embodiments does not necessarily require any additional measuring arrangements or devices. How the possible current and/or voltage values, and/or values of any other quantities possibly needed, are obtained may also depend on the particular electric system and its characteristics. E.g. phase currents $\bar{I}_{L1}$, $\bar{I}_{L2}$ and $\bar{I}_{L3}$ of the feeder F1 of the exemplary electric network and/or other current and/or voltage and/or other quantities possibly needed in the various embodiments may be monitored essentially continuously or the monitoring of at least some quantities may start only upon detecting a fault condition depending on whether pre-fault values for the quantity in question are utilized or not, for instance.

According to an embodiment, a method for earth-fault protection in a three-phase electric network comprises a) detecting a phase-to-earth fault in the three-phase electric network, b) determining an estimate of an earth-fault current of the detected phase-to-earth fault, c) determining an estimate of a body current as a function of time resulting from the detected phase-to-earth fault on the basis of the determined estimate of the earth-fault current and an elapsed time from the detecting of the phase-to-earth fault, d) comparing the determined estimate of the body current to a predetermined threshold for the body current defined as a function of time, and e) operating the earth-fault protection in the three-phase electric network in response to the determined estimate of the body current exceeding the predetermined threshold for the body current. According to an embodiment, steps b) to e) may be repeated essentially continuously or at predetermined intervals during the detected phase-to-earth fault.

The detection of the phase-to-earth fault can be performed with any suitable method applicable in the type of electric network in question such as compensated, unearthed or high resistance earthed network. As an example, an initial detection of the phase-to-earth fault may be based on, either essentially continuous or intermittent, monitoring of a zero-sequence voltage magnitude, or a change in the magnitude between two different time instances, and comparing it to a predetermined threshold, for example. Moreover, the detection of the phase-to-earth fault in the three-phase electric network may include determining the location of the phase-to-earth fault in the three-phase electric network, e.g. determining at least the faulted line outlet (feeder) F1 where the phase-to-earth fault occurs. Such determining of the faulted line outlet, for example, may also be based on any suitable method applicable in the type of electric network in question. As several methods are known for such detection of a phase-to-earth fault in a three-phase electric network, the detection needs not to be described on more detail herein. The detection of the phase-to-earth fault may start a time counter which counts the elapsed time from the detecting of the phase-to-earth fault.

After the detection of the phase-to-earth fault in the three-phase electric network, an estimate of an earth-fault current of the detected phase-to-earth fault is determined. According to an embodiment, the determining of the estimate may be performed essentially continuously or at predetermined intervals during the detected phase-to-earth fault. In other words, the estimate may thus be updated during the phase-to-earth fault continuously or at predetermined intervals, for example. According to an embodiment, the estimate of the earth-fault current represents the earth-fault current in a point of the detected phase-to-earth fault. The estimate of the earth-fault current of the detected phase-to-earth fault may be determined with any suitable method. According to an embodiment, the estimate of the earth-fault current may be determined on the basis of at least one or more current quantities measured at a measuring point, such as the location of the measuring arrangement 31, in the three-phase electric network. According to an embodiment, the estimate of the earth-fault current may be determined on the basis of a fundamental frequency component and/or at least one harmonic component of the one or more current quantities measured at the measuring point in the three-phase electric network. Some possible methods include e.g. the following examples:

Document EP 1304580 A2 discloses an example for determining a location of a phase-to-earth fault, where the earth-fault current $I_F$ is estimated with residual current ("nullstrom") and admittance setting essentially as follows:

$$I_F^{est}{}_F = I_o - U_0 \cdot Y_{0set}$$

where

$I_F^{est}$ is the estimated earth-fault current
$I_o$ is a measured residual current
$U_0$ is a measured residual voltage
$Y_{0set}$ is an admittance setting.

Document WO 2007/090484 A1 discloses a generalized fault model in the form of the following equation for determining an estimate of the total fault current:

$$\overline{I_F^{est}} = \bar{a}_{F1} \cdot \bar{I}_{F1} + \bar{a}_{F2} \cdot \bar{I}_{F2} + \bar{a}_{F0} \cdot \bar{I}_{F0}$$

where

$\bar{a}_{F1}, \bar{a}_{F2}, \bar{a}_{F0}$ are the share coefficients dependent on the fault type
$\bar{I}_{F1}, \bar{I}_{F2}, \bar{I}_{F0}$ are symmetrical components of the total fault current and where the second subscript denotes the following: 1 the positive, 2 the negative and 0 the zero sequence, respectively.

Document EP 1992954 A1 discloses yet another example, according to which an estimate of the earth-fault current may be calculated as:

$$I_F^{est} = 3(k_1 \cdot I_0) \text{ or alternatively } I_F^{est} = 3I_2$$

where

$k_1$ is a current distribution factor
$I_0$ is a measured zero-sequence current component
$I_2$ is a measured negative-sequence current component.

The determining of the estimate of the body current as a function of time resulting from the detected phase-to-earth fault on the basis of the determined estimate of the earth-fault current and an elapsed time from the detecting of the phase-to-earth fault may be performed in several alternative ways examples of which are described below in more detail. Term body current herein generally refers to a current flowing through a human or animal body resulting from e.g. touching an exposed conductive part in the event of an earth fault, e.g. as used in standard IEC 60479-1. Also the determining of the estimate of the body current may be performed essentially continuously or at predetermined intervals during the detected phase-to-earth fault. The estimate of the body current may be determined directly on the basis of the determined estimate of the earth-fault current or an earth-potential rise (EPR) and/or prospective touch voltage may be estimated first. According to an embodiment, the determining of the estimate of the body current comprises determining an estimate of a prospective touch voltage on the basis of the determined estimate of the earth-fault current and determining the estimate of the body current on the basis of the determined estimate of the prospective touch voltage. According to an embodiment, the estimate of the prospective touch voltage may be determined on the basis of an estimate of an earth potential rise. According to an embodiment, the estimate of the earth potential rise may be determined on the basis of the determined estimate of the earth-fault current and a predetermined earthing resistance.

According to an embodiment, after the earth-fault current is estimated, the earth-potential rise can be estimated as follows:

$$EPR^{est} = r \cdot I_F^{est} \cdot R_E , \hspace{4cm} \text{Eq. 1}$$

where

$EPR^{est}$ = Earth potential rise estimate [V]

$$I_F^{est} = \text{Earth-fault current estimate [A]}$$

r= Reduction factor [0...1]
$R_E$= Earthing resistance [ohm].

Term earth potential rise may be generally understood as a voltage between an earth electrode or an earthing system and a reference earth. The reference earth refers to a part of the earth outside the area of influence of an earth electrode or an earthing system, where between any two points no voltage difference due to earth-fault current exists. Moreover, term earthing resistance may be generally understood as a resistance to earth i.e. the resistance between the earthing system and the reference earth.

From the earth-potential rise estimate, the prospective touch voltage can be estimated as follows:

$$U_{vT}^{est} = k \cdot EPR^{est},\qquad\qquad \text{Eq. 2}$$

where

$U_{vT}^{est}$ = Prospective touch voltage estimate [V], i.e. a potential difference appearing during an earth fault between a standing point (earth) and a conductive object touchable e.g. by a hand when these parts are not touched.

$k$= is a factor [0...1] describing the share of EPR, which results as a prospective touch voltage during a touch voltage situation.

Generally, the share of the EPR that appears as prospective touch voltage may depend on e.g. the earth resistivity, the geometry of the earth electrode and/or the earthing system and/or on the distance of the measuring or standing point from the edge of the earth electrode or earthing system.

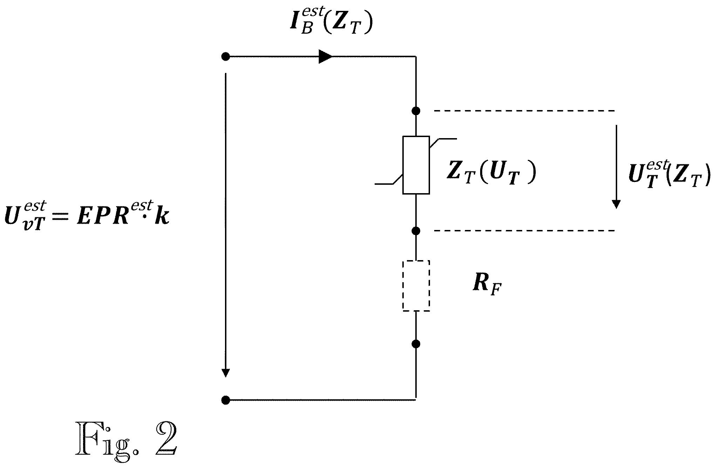

According to an embodiment, for estimation of a risk of electric shock due to touch voltage, the electrical equivalent scheme of Figure 2 can be used. Figure 2 illustrates an equivalent circuit for body current and touch voltage due to an earth-fault. In Figure 2, the following notations are used:

$$U_{vT}^{est} = \text{Prospective touch voltage estimate [V]}$$

$EPR^{est}$ = Earth potential rise estimate [V]

$k$= is a factor [0...1] describing the share of EPR, which results as a prospective touch voltage during touch voltage situation

$I_B^{est}(Z_T)$ = Body impedance dependent body current estimate (non-linear) [A]

$Z_T(U_T)$= Touch voltage dependent body impedance (non-linear) [ohm]

$U_T^{est}(Z_T)$ = Body impedance dependent touch voltage estimate (non-linear) [V]

$R_F$= Resistance [ohm] taking account any additional resistances in the fault current path through body, such as gloves, footwear and/or contact resistance to soil, for example.

The values of touch voltage dependent body impedance $Z_T(U_T)$ may depend on several factors, such as, on the current path, duration of current flow, degree of moisture of the skin and/or surface area of contact. As an example, standard IEC 60479-1 provides such impedance values based on experimental results available from measurements carried out. From Figure 2 the following equation for the body current estimate can be derived:

$$I_B^{est}(Z_T) = \frac{U_{vT}^{est}}{Z_T(U_T)+R_F}\qquad\qquad \text{Eq .3}$$

where the body impedance dependent touch voltage estimate can be calculated based on the prospective touch voltage estimate as:

$$U_T^{est}(Z_T) = \frac{Z_T(U_T)}{Z_T(U_T)+R_F} \cdot U_{vT}^{est} \qquad\qquad \text{Eq. 4}$$

Thus, according to an embodiment, the estimate of the body current may be determined on the basis of the determined estimate of the prospective touch voltage, the touch voltage dependent body impedance and the predetermined resistance, e.g. as per equation 3. Moreover, according to an embodiment, the touch voltage estimate may be dependent on the body impedance, e.g. as per equation 4.

The value for the estimate of the body current $\dot{I}_B^{est}$ for a given estimated prospective touch voltage value can be obtained, for example, based on the following procedure A to E:

A. A prospective touch voltage is estimated, e.g. as per Eq.1 and Eq 2.

B. Function A is defined, which describes how a body impedance depends on the touch voltage: In general format:

$$f_A(U_T) = Z_T$$

C. Function B is defined, which describes how the touch voltage depends on the body impedance with values of the prospective touch voltage and the additional resistance in the fault current path as parameters (as per Eq. 4). The value of the prospective touch voltage may be based on the estimated earth-fault current (as per Eq. 1 and 2), and the value of the additional resistance may be given as a setting parameter, for example.

$$f_B(Z_T) = U_{vT}{}^*Z_T \;/\; (Z_T+R_F) = U_{vT}{}^*f_A(U_T) \;/\; (f_A(U_T)+R_F)) = U_T$$

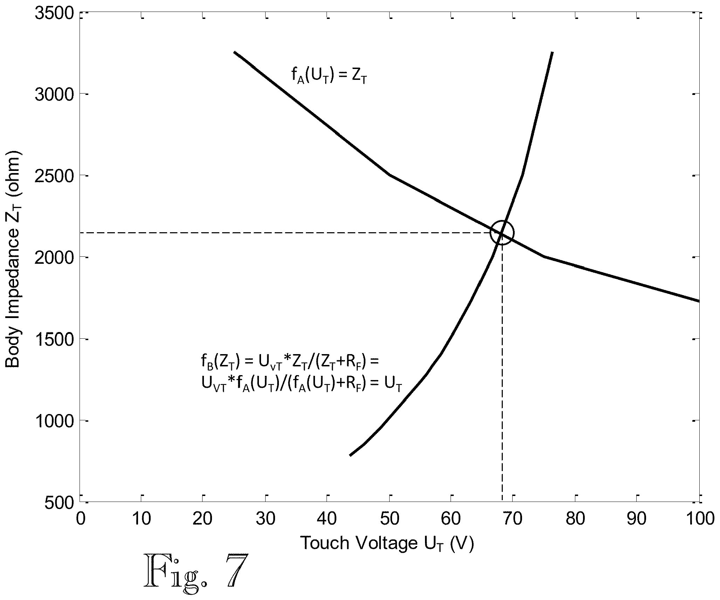

D. An intersection point of functions A and B with given values of the prospective touch voltage and the additional resistance in the fault current path gives the resulting value of the touch voltage and the corresponding body impedance described by the equivalent circuit of Figure 2. For solving the intersection point of two non-linear functions e.g. any well-known mathematical methods could be applied. For example, two functions $f_A(x)$, $f_B(x)$ may be equated to find the intersection point: $[f_A(x) = f_B(x)]$. Then the equation can be solved to find the value of (x). It is possible to use e.g. numerical methods such as the Newton-Raphson method. Also a graphical method could be used, where both functions are plotted in the same graph, for example. An example of such a graphical procedure is illustrated in Figure 7 in which the intersection point of functions A and B with example values provides a solution for $Z_T$ and $U_T$ as: $Z_T$=2140$\Omega$ and $U_T$=68V.

E. Corresponding body current can be calculated based on the determined intersection point using e.g. Eq.3. In the example of Figure 7, the value of the estimate of the body current $I_B^{est}$ can be calculated as:

$$I_B^{est}=U_{vT}^{est}/(Z_T+R_F)=100V/(2140+1000)\Omega=32mA$$

or

$$I_B^{est}=U_{vT}^{est}/Z_T=68V/2140\Omega =32mA.$$

Any other suitable mathematical method to calculate the value for the body current for a given prospective touch voltage value e.g. according to the example equivalent circuit in Figure 2 could be used. For example, general iterative methods could be used to find the solution, such as the Newton-Raphson method or the Bisection method, which can be used for finding the intersection point of two non-linear exponential curves, for instance. Possible examples are given in the following:

1. Newton-Raphson method:

   ○ This method is useful for finding the roots of a function. Given two functions (f(x)) and (g(x)), we want to find the value of (x) where (f(x) = g(x)).
   ○ Start with an initial guess for (x), denoted as (x_0).
   ○ Iteratively update (x) using the following formula: [x_{n+1} = x_n - \frac{f(x_n) - g(x_n)}{f'(x_n) - g'(x_n)}] where (f'(x_n)) and (g'(x_n)) are the derivatives of (f(x)) and (g(x)) evaluated at (x_n).
  ◦ Repeat until the difference between consecutive (x) values is small enough (convergence criteria).

2. Bisection Method:

  ◦ This method works well when the functions are continuous and have opposite signs at the interval endpoints.
  ◦ Given an interval ([a, b]) where (f(a)) and (f(b)) have opposite signs, find the midpoint (c = \frac{a + b}{2}).
  ◦ If (f(c)) is close enough to zero, (c) is the intersection point.
  ◦ Otherwise, update the interval: if (f(a)) and (f(c)) have opposite signs, set ([a, b = [a, c]); otherwise, set ([a, b] = [c, b]).
  ◦ Repeat until the interval becomes sufficiently small.

It is preferable to choose appropriate initial values and convergence criteria based on the specific problem.

A further example of an iterative method is given below and can be used to calculate the resulting value of the touch voltage and the corresponding body impedance, and further the value of the body current:
Known parameters, example:

- $U_{vT}^{est} = 100V$ is obtained with Eq.1 and Eq.2
- $R_F = 1000$ ohm given as setting for the additional resistance

Task is to solve the touch voltage and the corresponding body impedance and consequently solve the body current:

1. Initial guess: $U_T^{est} = 100V$, $Z_T = 1725$ ohm (from Table 1 in standard IEC 60479-1:2018)

2. Calculation $U_T^{est} = U_{vT}^{est} * (Z_T / (Z_T + R_F)) = 63V$, which corresponds $Z_T = 2240$ ohm (IEC 60479-1:2018) (1. round)

3. Set $Z_T = 2240$ ohm

4. Calculation $U_T^{est} = U_{vT}^{est} * (Z_T / (Z_T + R_F)) = 69V$, which corresponds $Z_T = 2120$ ohm (IEC 60479-1:2018) (2. round)

5. Set $Z_T = 2120$ ohm

6. Calculation $U_T^{est} = U_{vT}^{est} * (Z_T / (Z_T + R_F)) = 68V$, which corresponds $Z_T = 2140$ ohm (IEC 60479-1:2018) (3. round)

7. Set $Z_T = 2140$ ohm

8. Calculation $U_T^{est} = U_{vT}^{est} * (Z_T / (Z_T + R_F)) = 68V$, which corresponds $Z_T = 2140$ ohm (IEC 60479-1:2018) (4. round)

$U_T^{est} = 68V$ and $Z_T = 2140$ ohm does not change so iteration is completed. Consequently the body current estimate can be calculated as:

$$I_B^{est} = U_{vT}^{est} / (Z_T + R_F) = 32mA$$

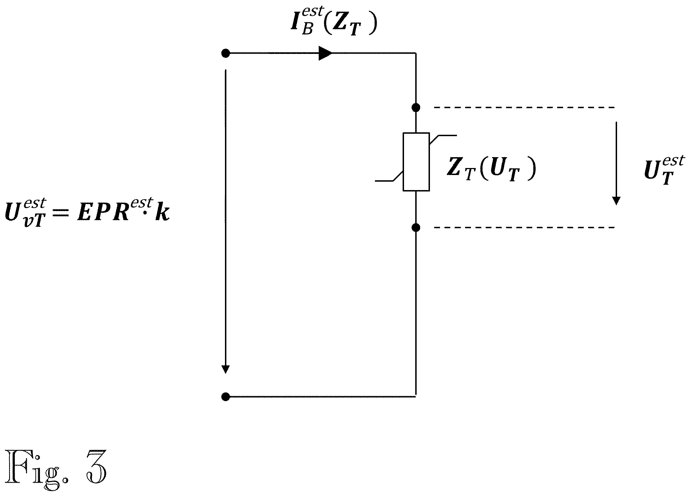

As an alternative, and as a possible worst-case scenario from safety perspective, additional resistances could be ignored, thus for the electric shock due to touch voltage, the electrical equivalent scheme shown in Figure 3 could be used. Figure 3 illustrates an equivalent circuit for the body current and the touch voltage due to the earth-fault according to an alternative embodiment. In this case the estimated touch voltage equals the estimated prospective touch voltage, i.e.

$$U_T^{est} = U_{vT}^{est}.$$

From Figure 3 we can derive an equation for the estimated body current:

$$I_B^{est}(Z_T) = \frac{U_{vT}^{est}}{Z_T(U_{vT})} = \frac{U_T^{est}}{Z_T(U_T)} \qquad \text{Eq. 5}$$

where the touch voltage dependent body impedance (non-linear) value $Z_T(U_T)$ may be predetermined. Such a predetermined touch voltage dependent body impedance value can be obtained from any applicable standard, such as standard IEC 60479, or determined otherwise, for example. Thus, according to an embodiment, the estimate of the body current may be determined on the basis of the determined estimate of the prospective touch voltage and the touch voltage dependent body impedance, wherein the touch voltage estimate equals to the prospective touch voltage estimate, e.g. as per equation 5.

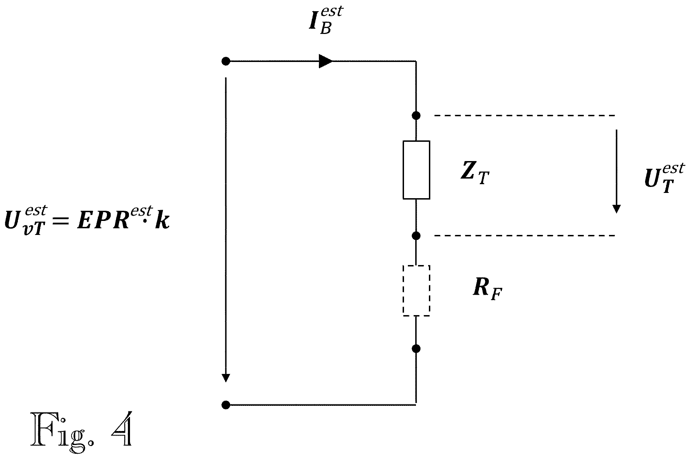

As yet another alternative, the body impedance can be assumed to be a constant value (not dependent on the touch voltage), in which case the electrical equivalent scheme of Figure 4 could be used. Figure 4 illustrates an equivalent circuit for the estimated body current and the touch voltage due to the earth-fault according to an alternative embodiment. From Figure 4 we can derive an equation for the estimated body current:

$$I_B^{est} = \frac{U_{vT}^{est}}{Z_T + R_F} = \frac{k \cdot EPR^{est}}{Z_T + R_F} = \frac{k \cdot r \cdot I_F^{est} \cdot R_E}{Z_T + R_F} \qquad \text{Eq. 6}$$

Thus, according to an embodiment, the estimate of the body current may be determined on the basis of the determined estimate of the prospective touch voltage, the predetermined body impedance having a constant value and the predetermined resistance, e.g. as per equation 6. Or alternatively, the estimate of the body current may be determined on the basis of the determined estimate of the earth fault current, the predetermined body impedance having a constant value and the predetermined resistance, e.g. as per equation 6.

Regardless of how the value of the estimate of the body current $I_B^{est}$ is determined, the estimate of the body current as a function of time may be determined, taking into account also the elapsed time from the detecting of the phase-to-earth fault, as: $I_B^{est}(t)$, where $I_B^{est}$ is the value (magnitude) [A] of the estimated body current during the fault at time instant $t$, where $t$ (time) may be the fault duration, i.e. the elapsed time counted from the detecting of the phase-to-earth fault to the time instant for which the determined estimate of the earth-fault current, which is used for determining the value of the estimate of the body current, is valid. According to an embodiment, also the possible delay caused by the operation of the switching apparatus 32 of the protection equipment used may be taken into account. Thus, the fault duration $t$ may essentially correspond to the elapsed time counted from the detecting of the phase-to-earth fault decremented by the predetermined operation (switching) delay of the switching apparatus. According to an embodiment, the determining of the the estimate of the body current may be performed essentially continuously or at predetermined intervals during the detected phase-to-earth fault.

The estimate of the body current $I_B^{est}(t)$ may then be compared with a predetermined threshold for the body current defined as a function of time. Such a predetermined threshold for the body current may be given as a (predetermined) permissible body current during the fault $I_B$ as a function of time, such as a permissible fault duration (clearance time) $t_f$, as $I_B(t_f)$. Such a predetermined permissible body current may be stated by an applicable electrical safety standard(s) and/or determined otherwise, for example. According to an embodiment, the earth-fault protection in the three-phase electric network may then be operated in response to the determined estimate of the body current $I_B^{est}(t)$ exceeding the predetermined permissible threshold $I_B(t_f)$ for the body current.

According to an embodiment, the earth-fault protection in the three-phase electric network may be operated when (in response to) $I_B^{est}(t) > I_B(t_f)$, where $t_f = t$. Consequently, an operate time of the protection, i.e. the time between the moment of detecting a fault and the moment when the protection operates in response to the fault, can become automatically adapted based on the estimated body current and the permissible value given as a function of fault duration.

According to another embodiment, the possible delay, $t_{cb}$, caused by the operation of the switching apparatus 32 of the protection equipment used may be taken into account in the comparison. This may be implemented in various ways. According to one embodiment, the earth-fault protection in the three-phase electric network may be operated when (in response to) $I_B^{est}(t) > I_B(t_f)$, where $t_f=t+t_{cb}$. According to another embodiment, the possible delay, $t_{cb}$, caused by the operation of the switching apparatus 32 of the protection equipment used, and/or any other delay, may be readily included or suitably compensated for in the predetermined permissible threshold $I_B(t_f)$ and the earth-fault protection in the three-phase electric network may then be operated when (in response to) $I_B^{est}(t) >$ $I_B(t_f)$, where $t_f=t$. In a similar manner, any other possible delays in the system could be taken into account in the comparison.

As a result, the earth-fault protection can then limit the body current resulting from the fault essentially, and in this way limit the risk of electric shock in the event of an earth-fault by fulfilling an operation speed requirement set for the earth-fault protection, for example. In other words, the operation speed of earth-fault protection may fulfill the values determined by the predetermined threshold value $I_B (t_f)$, which may be expressed as a curve, according to the following equation:

$$I_B^{est}(t_{op}) \le I_B(t_f) \qquad\qquad \text{Eq. 7}$$

where

$I_B^{est}$ is the estimate of the body current during the fault [A]
$t_{op}$ is the actual fault duration (i.e. the operate time of the protection including any switching delays) [s]
$I_B$ is the predetermined permissible body current during the fault [A]
$t_f$ is the (maximum) permissible duration of the fault [s]

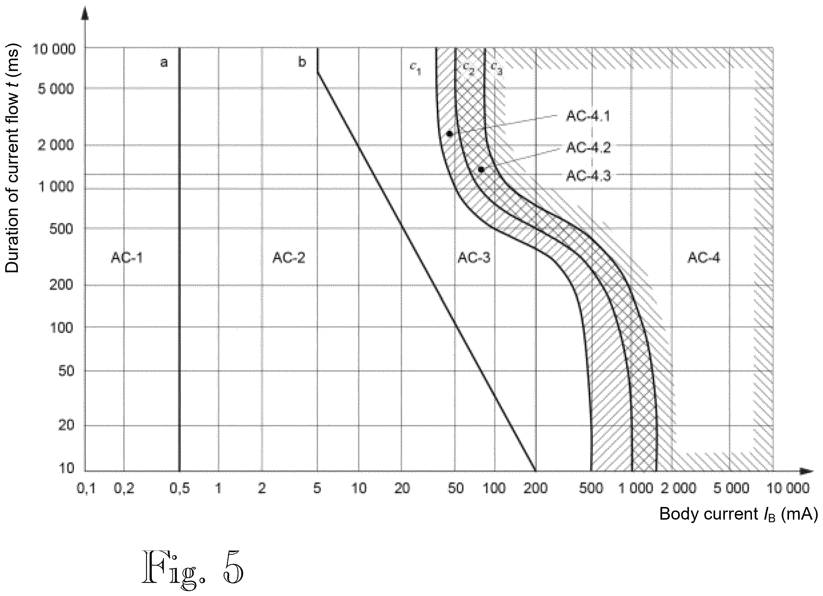

The permissible value for body current $I_B$ given as a function of permissible fault duration $t_f$ can be predetermined e.g. by a user or operator of the system or it can be based on any prevailing electrical standard(s), such as IEC 60479 and IEEE 80. As an example, in standard IEC 60479-1 the permissible value for the body current is given as a function of fault duration as curves noted as a, b, $c_1$, $c_2$ and $c_3$ in the example of Figure 5 which illustrates conventional time/current zones of effects of AC currents (15 Hz to 100 Hz) on persons for a current path corresponding to left hand to feet. The zones between the curves in the example are denoted as AC-1, AC-2, AC-3, and AC-4 comprising subzones AC-4.1, AC-4.2 and AC-4.3. Curve a defines threshold of perception, i.e. the minimum current level at which a person can perceive an electric shock. Curve b defines a threshold of reaction, i.e. the current level at which a person can feel a shock and involuntarily react (such as pulling away from the source). Beyond this threshold, muscle contractions may immobilize the body. Curves $c_1$, $c_2$ and $c_3$ define thresholds of ventricular fibrillation, i.e., current level which indicates the risk of ventricular fibrillation, a life-threatening heart rhythm disturbance. Below curve $c_1$, the probability of ventricular fibrillation is 0%, between curves $c_1$ and $c_2$ (in subzone AC-4.1) the probability of ventricular fibrillation increases up to about 5%, between curves $c_2$ and $c_3$ (in subzone AC-4.2) the probability of ventricular fibrillation increases up to about 50%. Beyond curve $c_3$ (in subzone AC-4.3) the probability of ventricular fibrillation increases above 50%. Regarding ventricular fibrillation curves $c_1$, $c_2$ and $c_3$ in Figure 5, they relate to the effects of current which flows in the path left hand to feet. The heart-current factor permits the calculation of currents $I_h$ through paths other than left hand to feet which represent the same danger of ventricular fibrillation as that corresponding to $I_{ref}$ left hand to feet shown in exemplary Figure 5:

$$I_H = \frac{I_{ref}}{F} \qquad\qquad \text{Eq. 8}$$

where

$I_H$ is the permissible body current for paths given in Table 1
$I_{ref}$ is the permissible body current for the path left hand to feet given in Figure 5
F is the heart-current factor given in Table 1.

For different current paths, some exemplary heart-current factors F are given in Table 1, which shows Heart-current factor F for different current paths according to IEC 60479-1:2018 (Table 12 therein).

Table 1

| Current path | Heart-current factor F |
|---|---|
| Left hand to left foot, right foot or to both feet | 1,0 |
| Both hands to both feet | 1,0 |
| Left hand to right hand | 0,4 |
| Right hand to left foot, right foot or to both feet | 0,8 |
| Back to right hand | 0,3 |
| Back to left hand | 0,7 |
| Chest to right hand | 1,3 |
| Chest to left hand | 1,5 |
| Seat to left hand, right hand or to both hands | 0,7 |
| Left foot to right foot | 0,04 |

According to standard IEEE 80, for example, the duration for which a 50 Hz or 60 Hz current can be tolerated by most people is related to its magnitude in accordance with Equation 9, which assumes that 99.5% of all persons can safely withstand, without ventricular fibrillation, the passage of a current with permissible magnitude and duration determined by the following formula:

$$I_B(t_f) = \frac{k}{\sqrt{t_f}},\qquad\qquad \text{Eq. 9}$$

where k is empirically found constant depending on the person's weight.

For 50kg body weight the permissible body current is:

$$I_B(t_f) = \frac{0.116}{\sqrt{t_f}}\qquad\qquad \text{Eq. 9a}$$

For 70kg body weight the permissible body current is:

$$I_B(t_f) = \frac{0.157}{\sqrt{t_f}}\qquad\qquad \text{Eq. 9b}$$

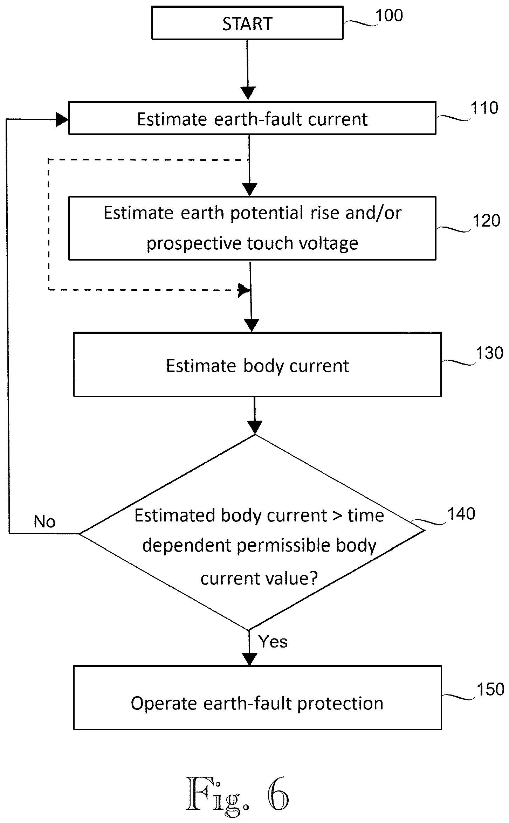

Figure 6 shows a flow diagram according to an embodiment. In the example, in step 100 the protection starts in response to detecting a phase-to-earth fault in the three-phase electric network. The time counter, which counts the elapsed time from the detecting of the phase-to-earth fault, may be started in step 100. In step 110 the estimate of the earth-fault current of the detected phase-to-earth fault is determined. Optionally in step 120 the estimate of the earth potential rise and/or the prospective touch voltage is determined. However, if the estimate of the earth potential rise and/or the prospective touch voltage are not required, step 120 may be omitted. In step 130 the estimate of the body current as a function of time resulting from the detected phase-to-earth fault is determined. In step 140 the determined estimate of the body current is compared to the predetermined threshold for the body current defined as a function of time. In step 150 the earth-fault protection in the three-phase electric network is operated in response to the determined estimate of the body current exceeding the predetermined threshold for the body current. If in step 140 the determined estimate of the body current does not exceed the predetermined threshold for the body current, steps 110 to 140 are repeated e.g. essentially continuously or at predetermined intervals, e.g. as long as the detected earth fault is occurring or active. This may include monitoring the status or existence of the detected earth fault. As an example, a rate at which steps 110 to 140 are repeated may be based on a sampling frequency with which measurements for determining the estimate of the earth-fault current of the detected phase-to-earth fault are performed.

The proposed solution according to the various embodiments and any combination(s) thereof thus enables an earth-fault protection operation based on predetermined maximum allowed body current values as a function of fault duration, e.g. as defined standard IEC 60479. The solution may enable a user or an operator of the protection to define the applied safety criterion more accurately, such that the operate time may be based on e.g. the following criteria: no probability of a ventricular fibrillation -> use of curve c1 of Figure 5 and/or a total body impedances $Z_T$ for a current path hand to hand AC 50/60 Hz, for large surface areas of contact in saltwater-wet conditions. It should be noted that any such criteria based on the body current values as a function of fault duration might be applied. The solution could also apply any user or operator defined permissible (e.g. tolerable) body current values to be used, similarly as any user defined total body impedances $Z_T$ values to be used, when determining the operate time of protection. Moreover, the proposed solution according to the various embodiments and any combination(s) thereof thus enables an earth-fault protection operation complying an electrical safety standard or a requirement of such a standard, such as standard IEC 60479-1, which is based on a predetermined maximum allowed body current values as a function of fault duration, for example.

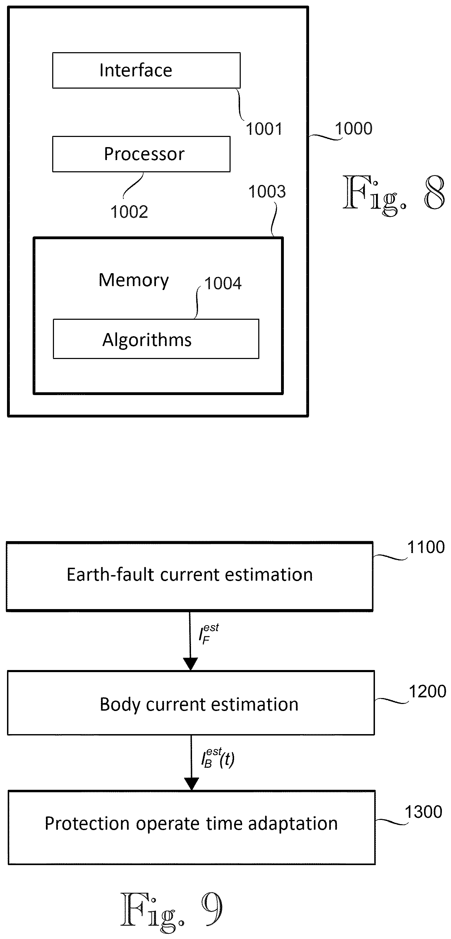

The control arrangement 30 or other means for implementing at least part of the functionality according to any one of the embodiments herein, or a combination thereof, may be implemented as one physical unit or as two or more separate physical units that are configured to implement the functionality. Herein the term 'unit' generally refers to a physical or logical entity, such as a physical device or a part thereof or a software routine. Figure 8 is a simplified block diagram illustrating some units for an apparatus (device, equipment) 1000 configured to perform at least some functionality of the control arrangement 30 or corresponding apparatus. In the illustrated example, the apparatus 1000 comprises one or more interface (IF) entities 1001, such as one or more user interfaces and/or data interfaces, and one or more processing entities 1002 connected to various interface entities 1001 and to one or more memories 1003. The one or more interface entities 1001 may be entities for receiving and transmitting information, such as communication interfaces comprising hardware and/or software for realising communication connectivity according to one or more communication protocols, or for realising data, e.g. measuring data, storing and fetching, and/or for providing user interaction via one or more user interfaces. A processing entity 1002 is capable to perform calculations and configured to implement at least part of functionalities/operations described above, with corresponding algorithms 1004 stored in the memory 1003. The processing entity 1002 may include one or more processors, controllers, control units, microcontrollers, etc. configurable to carry out e.g. embodiments, examples, implementations and/or operations described above. Generally, a processor may be a central processing unit, but the processor entity 1002 may be an additional operation processor or a multicore processor or a microprocessor, for instance. A memory 1003 may be usable for storing a computer program code required for one or more functionalities/operations described above, that is, the algorithms 1004 for implementing the functionality/operations described above. The memory 1003 may also be usable for storing, at least temporarily, other possible information required for one or more functionalities/operations described above. The memory 1003 may comprise a data buffer that may, at least temporarily, store for example measurement data and/or information received as a user input. The apparatus comprising the means for providing any embodiment described herein may be implemented at least partly by means by such apparatus 1000 as exemplified in Figure 8. Figure 9 is a simplified block diagram illustrating some possible functional subunits for the apparatus 1000 configured to perform at least some functionality of the control arrangement 30. Such subunits may comprise an earth-fault current estimation block 1100 configured to determine the estimate of the earth-fault current of the detected phase-to-earth fault, a body current estimation block 1200 configured to determine the estimate of the body current as a function of time and a protection operate time adaptation block 1300 configured to adapt the operate time of the earth-fault protection based on the estimate of the body current according to any one of the embodiments described above.

Generally, the control arrangement 30 or other means for implementing at least part of the functionality according to any one of the embodiments herein may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the various embodiments, or a part thereof, may further comprise suitable input means for receiving e.g. measurement and/or control data, and output means for outputting e.g. control or any other data, such as the determined thermal load. It is also possible to use a specific integrated circuit or circuits, such as application-specific integrated circuits (ASIC), digital signal processing devices (DSPD), programmable logic devices (PLD), field-programmable gate arrays (FPGA) and/or discrete electric components and devices for implementing the functionality according to any one of the embodiments.

Many electric devices, such as electric power systems, and components thereof, such as protective relays or intelligent electronic devices, may comprise processors and memory that may be utilized in implementing the functionality according to the various embodiments described herein. Thus, at least some modifications and configurations possibly required for implementing an embodiment could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any client-readable distribution/data storage medium or memory unit(s) or article(s) of manufacture, comprising program instructions executable by one or more processors/computers, which instructions, when loaded into an apparatus, constitute the control arrangement, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above, for example by means of any of Figures 1 to 8 and any combination thereof, may be an element that comprises one or more arithmetic logic units, a number of special registers and control circuits.

It will be obvious to a person skilled in the art that, as the technology advances, the inventive concept can be implemented in various ways. The invention and its embodiments are not limited to the examples described above but may vary within the scope of the claims.

**Claims**

1. A computer implemented method for earth-fault protection in a three-phase electric network, the method comprising:

   a) detecting a phase-to-earth fault in the three-phase electric network;
   b) determining an estimate of an earth-fault current of the detected phase-to-earth fault;
   c) determining an estimate of a body current as a function of time resulting from the detected phase-to-earth fault on the basis of the determined estimate of the earth-fault current and an elapsed time from the detecting of the phase-to-earth fault;
   d) comparing the determined estimate of the body current to a predetermined threshold for the body current defined as a function of time; and
   e) operating the earth-fault protection in the three-phase electric network in response to the determined estimate of the body current exceeding the predetermined threshold for the body current.

2. A computer implemented method as claimed in claim 1, wherein steps b) to e) are repeated essentially continuously or at predetermined intervals during the detected phase-to-earth fault.

3. A computer implemented method as claimed in claim 1 or 2, wherein the operating of the earth-fault protection comprises switching off or limiting the earth-fault current of the detected phase-to-earth fault in the three-phase electric network.

4. A computer implemented method as claimed in any one of claims 1 to 3, wherein the determining of the estimate of the body current comprises:

   determining an estimate of a prospective touch voltage on the basis of the determined estimate of the earth-fault current; and
   determining the estimate of the body current on the basis of the determined estimate of the prospective touch voltage.

5. A computer implemented method as claimed in claim 4, wherein the estimate of the body current is determined on the basis of the determined estimate of the prospective touch voltage, a touch voltage dependent body impedance and a predetermined resistance.

6. A computer implemented method as claimed in claim 5, wherein the touch voltage is dependent on the body impedance.

7. A computer implemented method as claimed in claim 4, wherein the estimate of the body current is determined on the basis of the determined estimate of the prospective touch voltage and a touch voltage dependent body impedance, wherein the touch voltage equals to the prospective touch voltage.

8. A computer implemented method as claimed in claim 4, wherein the estimate of the body current is determined on the basis of the determined estimate of the prospective touch voltage, a predetermined body impedance having a constant value and a predetermined resistance.

9. A computer implemented method as claimed in any one of claims 4 to 8, wherein the estimate of the prospective touch voltage is determined on the basis of an estimate of an earth potential rise.

10. A computer implemented method as claimed in claim 9, wherein the estimate of the earth potential rise is determined on the basis of the determined estimate of the earth-fault current and a predetermined earthing resistance.

11. A computer implemented method as claimed in any one of claims 1 to 10, wherein the estimate of the earth-fault current is determined on the basis of at least one or more current quantities measured at a measuring point in the three-phase electric network.

12. A computer implemented method as claimed in claim 11, wherein the estimate of the earth-fault current is determined on the basis of a fundamental frequency component and/or at least one harmonic component of the one or more current quantities measured at the measuring point in the three-phase electric network.

13. A computer program product comprising program instructions which, when run by a computing apparatus, cause the computing apparatus to carry out a method as claimed in any one of claims 1 to 12.

14. An apparatus for earth-fault protection in a three-phase electric network, the apparatus comprising:

means configured to detect a phase-to-earth fault in the three-phase electric network;
means configured to determine an estimate of an earth-fault current of the detected phase-to-earth fault;
means configured to determine an estimate of a body current as a function of time resulting from the detected phase-to-earth fault on the basis of the determined estimate of the earth-fault current and an elapsed time from the detecting of the phase-to-earth fault;
means configured to compare the determined estimate of the body current to a predetermined threshold for the body current defined as a function of time; and
means configured to operate the earth-fault protection in the three-phase electric network in response to the determined estimate of the body current exceeding the predetermined threshold for the body current.

15. An apparatus according to claim 10, further comprising means configured to carry out a method as claimed in any one of claims 2 to 12.

**Amended claims in accordance with Rule 137(2) EPC.**

1. A computer implemented method for earth-fault protection in a three-phase electric network, the method comprising:

a) detecting (100) a phase-to-earth fault (F) in the three-phase electric network;
b) determining (110) an estimate of an earth-fault current of the detected phase-to-earth fault (F);
c) determining (130) an estimate of a body current as a function of time resulting from the detected phase-to-earth fault (F) on the basis of the determined estimate of the earth-fault current and an elapsed time from the detecting of the phase-to-earth fault;
d) comparing (140) the determined estimate of the body current to a predetermined threshold for the body current defined as a function of time; and
e) operating (150) the earth-fault protection in the three-phase electric network in response to the determined estimate of the body current exceeding the predetermined threshold for the body current.

2. A computer implemented method as claimed in claim 1, wherein steps b) to e) are repeated essentially continuously or at predetermined intervals during the detected phase-to-earth fault (F).

3. A computer implemented method as claimed in claim 1 or 2, wherein the operating (150) of the earth-fault protection comprises switching off or limiting the earth-fault current of the detected phase-to-earth fault (F) in the three-phase electric network.

4. A computer implemented method as claimed in any one of claims 1 to 3, wherein the determining (130) of the estimate of the body current comprises:

> determining an estimate of a prospective touch voltage on the basis of the determined estimate of the earth-fault current; and
> determining the estimate of the body current on the basis of the determined estimate of the prospective touch voltage.

5. A computer implemented method as claimed in claim 4, wherein the estimate of the body current is determined (130) on the basis of the determined estimate of the prospective touch voltage, a touch voltage dependent body impedance and a predetermined resistance.

6. A computer implemented method as claimed in claim 5, wherein the touch voltage is dependent on the body impedance.

7. A computer implemented method as claimed in claim 4, wherein the estimate of the body current is determined (130) on the basis of the determined estimate of the prospective touch voltage and a touch voltage dependent body impedance, wherein the touch voltage equals to the prospective touch voltage.

8. A computer implemented method as claimed in claim 4, wherein the estimate of the body current is determined (130) on the basis of the determined estimate of the prospective touch voltage, a predetermined body impedance having a constant value and a predetermined resistance.

9. A computer implemented method as claimed in any one of claims 4 to 8, wherein the estimate of the prospective touch voltage is determined (120) on the basis of an estimate of an earth potential rise.

10. A computer implemented method as claimed in claim 9, wherein the estimate of the earth potential rise is determined (120) on the basis of the determined estimate of the earth-fault current and a predetermined earthing resistance.

11. A computer implemented method as claimed in any one of claims 1 to 10, wherein the estimate of the earth-fault current is determined (110) on the basis of at least one or more current quantities measured at a measuring point (31) in the three-phase electric network.

12. A computer implemented method as claimed in claim 11, wherein the estimate of the earth-fault current is determined (110) on the basis of a fundamental frequency component and/or at least one harmonic component of the one or more current quantities measured at the measuring point (31) in the three-phase electric network.

13. A computer program product comprising program instructions which, when run by a computing apparatus, cause the computing apparatus to carry out a method as claimed in any one of claims 1 to 12.

14. An apparatus for earth-fault protection in a three-phase electric network, the apparatus (30, 31, 32; 1000) comprising:

> means configured to detect a phase-to-earth fault (F) in the three-phase electric network;
> means (1100) configured to determine an estimate of an earth-fault current of the detected phase-to-earth fault (F);
> means (1200) configured to determine an estimate of a body current as a function of time resulting from the detected phase-to-earth fault (F) on the basis of the determined estimate of the earth-fault current and an elapsed time from the detecting of the phase-to-earth fault;
> means (1300) configured to compare the determined estimate of the body current to a predetermined threshold for the body current defined as a function of time; and
> means configured to operate the earth-fault protection in the three-phase electric network in response to the determined estimate of the body current exceeding the predetermined threshold for the body current.

15. An apparatus according to claim 10, further comprising means configured to carry out a method as claimed in any one of claims 2 to 12.

Fig. 1

Fig. 2

$$U_T^{est}$$

$$Z_T(U_T)$$

$$I_B^{est}(Z_T)$$

$$U_{vT}^{est} = EPR^{est} \cdot k$$

Fig. 3

$$U_{vT}^{est} = EPR^{est} \cdot k$$

$$I_B^{est}$$

$$Z_T$$

$$U_T^{est}$$

$$R_F$$

Fig. 4

**Fig. 5**

Fig. 6

$f_A(U_T) = Z_T$

$f_B(Z_T) = U_{vT}*Z_T/(Z_T+R_F) =$
$U_{vT}*f_A(U_T)/(f_A(U_T)+R_F) = U_T$

Fig. 7

Interface

1001

1000

Processor

1002

1003

Memory    1004

Algorithms

Fig. 8

Earth-fault current estimation    1100

$I_F^{est}$

Body current estimation    1200

$I_B^{est}(t)$

Protection operate time adaptation    1300

Fig. 9

EUROPEAN SEARCH REPORT

Europäisches
Patentamt
European
Patent Office
Office européen
des brevets

Application Number

**EP 24 18 7084**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/176102 A1 (HAUB DENNIS [DE] ET AL) 8 June 2023 (2023-06-08) * abstract; figure 1 * * paragraph [0003] - paragraph [0005] * * paragraph [0016] - paragraph [0019] * * paragraph [0026] - paragraph [0032] * * paragraph [0042] * ----- | 1-15 | INV. H02H3/16 H02H5/12 |
| A | US 2021/075210 A1 (WAHLROOS ARI [FI] ET AL) 11 March 2021 (2021-03-11) * abstract * * figures 1-2 * * paragraph [0030] - paragraph [0032] * ----- | 1-15 | |
| A | WO 2016/193529 A1 (JYVÄSKYLÄN ENERGIA OY [FI]) 8 December 2016 (2016-12-08) * abstract * * figure 1 * * page 4, line 10 - line 22 * ----- | 1-15 | |
| | | | TECHNICAL FIELDS SEARCHED (IPC) H02H |

The present search report has been drawn up for all claims

| Place of search | Date of completion of the search | Examiner |
|---|---|---|
| Munich | 19 February 2025 | Operti, Antonio |

EPO FORM 1503 03.82 (P04C01)

## ANNEX TO THE EUROPEAN SEARCH REPORT
## ON EUROPEAN PATENT APPLICATION NO.

EP 24 18 7084

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | | | Publication date | Patent family member(s) | | | Publication date |
|---|---|---|---|---|---|---|---|
| US 2023176102 | A1 | | 08-06-2023 | CN | 116247608 | A | 09-06-2023 |
| | | | | DE | 102021132161 | B3 | 07-06-2023 |
| | | | | EP | 4195434 | A1 | 14-06-2023 |
| | | | | US | 2023176102 | A1 | 08-06-2023 |
| US 2021075210 | A1 | | 11-03-2021 | EP | 3570400 | A1 | 20-11-2019 |
| | | | | ES | 2911035 | T3 | 17-05-2022 |
| | | | | US | 2021075210 | A1 | 11-03-2021 |
| | | | | WO | 2019219897 | A1 | 21-11-2019 |
| WO 2016193529 | A1 | | 08-12-2016 | CN | 107735690 | A | 23-02-2018 |
| | | | | EP | 3304105 | A1 | 11-04-2018 |
| | | | | FI | 126434 | B | 30-11-2016 |
| | | | | WO | 2016193529 | A1 | 08-12-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1304580 A2
- WO 2007090484 A1
- EP 1992954 A1